# EUROPÄISCHE PATENTSCHRIFT

(11) **EP 2 918 629 B1**
(45) Veröffentlichungstag und Bekanntmachung des Hinweises auf die Patenterteilung: **28.11.2018**
(21) Anmeldenummer: 15158026.3
(22) Anmeldetag: 06.03.2015
(51) Int. Cl.: C08J 5/18, D06N 3/00, D06N 3/06, D06N 3/08, D06N 3/14, C08L 27/06

(54) **VERFAHREN ZUR HERSTELLUNG EINES ATMUNGSAKTIVEN FILMS**
METHOD FOR MAKING A BREATHABLE FILM
PROCÉDÉ DE FABRICATION D'UN FILM RESPIRANT

(30) Priorität: 11.03.2014 DE 102014103201; 30.07.2014 DE 102014110813
(43) Veröffentlichungstag der Anmeldung: 16.09.2015
(73) Patentinhaber: Konrad Hornschuch AG, 74679 Weissbach (DE)
(72) Erfinder: Neumann, Thorsten, 74635 Kupferzell (DE); Kammerer, Birgit, 74635 Kupferzell (DE)
(74) Vertreter: Preusser, Andrea

(56) Entgegenhaltungen:
- EP-A1- 2 653 607
- WO-A1-2009/067384
- DE-A- 2 143 749
- DE-A1- 2 127 132
- US-A- 3 778 332
- US-A- 4 496 624

## Beschreibung

Die Erfindung betrifft ein Verfahren zur Herstellung eines atmungsaktiven Films auf Basis auf Polyvinylchlorid (PVC).

Filme auf Basis von PVC werden beispielsweise im Rahmen der Herstellung von Kunstledern verwendet, bei denen in der Regel ein Verbund von textilen bzw. Glas- oder Carbonfasergeweben, Gewirken, polymeren Schäumen oder Vliesstoffen mit einer Beschichtung eines derartigen PVC-Filmes versehen wird. Diese Beschichtungen können je nach Anwendungsfall kompakt oder geschäumt ausgeführt werden und zum Beispiel durch Prägen eine genarbte Oberfläche aufweisen, so dass sie einer Lederstruktur entsprechen.

Sofern der Film auf Basis von PVC atmungsaktive Eigenschaften aufweisen soll, was zum Beispiel bei Verwendung im Rahmen eines Sitzbezuges oder Schuhobermaterials sowie bei Wand und Deckenverkleidungen von Vorteil ist, um den Durchtritt von Wasserdampf zu ermöglichen, muss der Film eine ausreichende Anzahl von Poren aufweisen, durch die der Wasserdampf hindurchtreten kann.

Aus dem Stand der Technik ist es hierzu bekannt, an sich nicht atmungsaktive Filme auf Basis von PVC zum Beispiel mittels Nadelung atmungsaktiv auszugestalten, d.h. die Poren werden mechanisch eingebracht.

Aus der DE 1 960 992 A1 ist es bekannt, ein atmendes, mikroporöses Folienmaterial aus einem Polymergemisch, umfassend Polyurethanelastomere und Polyvinylchlorid herzustellen, indem das Polymer in einem organischen Lösungsmittel gelöst in dünner Schicht auf einem Substrat aufgetragen wird, dessen Substratoberfläche mit einem Fällungsmittel befeuchtet ist und die Unterseite des so beschichteten Substrates mit einem porösen Träger, der seinerseits mit Fällungsmittel befeuchtet ist, so lange in Berührung gebracht wird, bis das Polymer auf der Oberfläche des Substrats in Form einer im Wesentlichen von Makrohohlräumen freien mikroporösen Schicht ausgefällt ist. Das bekannte Verfahren ist damit nicht nur anlagentechnisch extrem aufwendig und wenig leistungsfähig, sondern erscheint auf wegen des vorzugsweise verwendeten Lösungsmittels Dimethylformamid unter dem Gesichtspunkt des Gesundheits- und Umweltschutzes als verbesserungswürdig.

US3778332 und DE2127132 betreffen ein Verfahren zur Herstellung eines hydrophilen, feinporigen, für Feuchtigkeitsdampf durchlässigen Schaumstoffs, geeignet als Kunstleder, und eine Verfestigung der Schaumbahnen unter Wärmeeinwirkung, wobei die genannt Verfestigung dadurch gekennzeichnet ist, dass man ein flüssiges Gemisch eines Polyvinylchlorids von Plastisolqualität mit einem flüssigen Polyurethanvorläufer aus einem Polyesterpolyol und/oder Polyätherpolyol und einem Polyisocyanat vermischt und zu dem Schaum verschäumt.

WO 2009/067384 A1 betrifft ein Verfahren zur Herstellung eines porigen, für Feuchtigkeitsdampf durchlässigen Beschichtungstoffs aus wasserbasiertem PVC und Polyurethan. Die Beschichtung wird in einem Trockenofen unter Wärmezufuhr getrocknet und vernetzt.

Aufgabe der Erfindung ist es daher, ein Verfahren zur Herstellung eines atmungsaktiven Films auf Basis von PVC vorzuschlagen, welches sich durch einfache Verfahrensführung insbesondere auch auf bereits vorhandenen Anlagen auszeichnet und ohne gesundheits- und umweltgefährdende Lösemittel auskommt.
Zur Lösung der gestellten Aufgabe wird erfindungsgemäß ein Verfahren gemäß den Merkmalen des Patentanspruchs 1 vorgeschlagen.
Vorteilhafte Ausgestaltungen und Weiterbildungen der Erfindung sind Gegenstand der abhängigen Ansprüche.
Das erfindungsgemäß vorgeschlagene Verfahren beruht auf der Abfolge der nachfolgenden Schritte:
1. Bereitstellen einer pastösen Masse, umfassend eine erste Fraktion aus PVC und eine zweite Fraktion aus einer Dispersion auf Basis von Polyether-, Polyester- oder Polycarbonat-Polyurethanen oder Abmischungen derselben und Wasser und eine dritte Fraktion aus Hilfs- und Zusatzstoffen, die miteinander zu der pastösen Masse vermischt werden, wobei die pastöse Masse ohne Zugabe eines organischen Lösungsmittels, ausgenommen Wasser aus den Fraktionen gebildet wird.
2. Aufbringen der aus erster bis dritter Fraktion hergestellten pastösen Masse auf eine geeignete Unterlage.
3. Trocknen und Ausgelieren der auf die Unterlage aufgebrachten pastösen Masse unter Wärmezufuhr zu einem kompakten Film mit ungeschäumter Struktur, wobei von der einen zur anderen Oberfläche des Filmes verlaufende Poren eines mittleren Porendurchmessers von 1µm bis 1 mm in dem Film ausgebildet werden, die dem Film Atmungsaktivität mit einer Gasdurchlässigkeit von 0,1 bis 200 l dm⁻² min⁻¹ und einer Wasserdampfdurchlässigkeit von 0,1 bis 200 mg cm⁻² h⁻¹ verleihen.

Wesentliches Merkmal des erfindungsgemäßen Verfahrens ist es daher, dass sämtliche zur Herstellung des Films benötigen Ausgangsmaterialien beispielsweise in einem gemeinsamen Behältnis zunächst zu einer pastösen Masse vermischt, beispielsweise verrührt werden, die pastöse Masse sodann in einer geeigneten, nachfolgend noch erläuterten Weise auf eine geeignete, nachfolgend ebenfalls noch erläuterte Unterlage aufgebracht wird und sodann die pastöse Masse auf der Unterlage lediglich durch Wärmezufuhr getrocknet, eventuell zur Reaktion gebracht und ausgeliert wird, wobei sich der Film ausbildet und wobei während der Filmausbildung in situ auch die gewünschten Poren für die Herstellung der atmungsaktiven Eigenschaft des Films ausgebildet werden.
Die Erfindung nutzt für die vorangehend beschriebene selbsttätige Porenausbildung während des Trocknens und Ausgelierens der pastösen Masse unter Wärmezufuhr den Effekt, dass sich die pastöse Masse aus an sich chemisch nicht kompatiblen Fraktionen, nämlich PVC und Fremdstoff, zusammensetzt. Der Fremdstoff weist dazu in der pastösen Masse eine nur geringe bis gegen Null gehende Benetzbarkeit auf. Während der Trocknung und des Ausgelierens der pastösen Masse bilden sich an den jeweiligen Phasen- bzw. Korngrenzen dieser inkompatiblen Fraktionen Risse und/oder Hohlräume aus, die von der einen bis zur anderen Oberfläche des Films durchgängig verlaufen, mithin Poren in dem Film ausbilden und überdies durch entsprechende Einstellungen der Verfahrenskomponenten und Verfahrensführung, wie nachstehend noch erläutert, hinsichtlich ihrer Größe beinflussbar und einstellbar sind.

Das erfindungsgemäße Verfahren ermöglicht es, einen atmungsaktiven Film auf Basis von PVC herzustellen, der lösemittelfrei hergestellt wird, da erfindungsgemäß die pastöse Masse ohne Zugabe eines gesundheits- oder umweltbedenklichen organischen Lösungsmittels, ausgenommen Wasser aus den Fraktionen gebildet wird.

Für die Ausbildung der pastösen Masse kann den Fraktionen lediglich ein gewisser Anteil Wasser zugesetzt sein, um die Viskosität der pastösen Masse einzustellen. Dieser wässerige Anteil beispielsweise in der zweiten Fraktion beeinflusst überdies die erfindungsgemäß ausgenutzte Porenbildung während des Trocknens der pastösen Masse zum atmungsaktiven Film positiv.

Nach einem Vorschlag der Erfindung kann die erste Fraktion Emulsions-PVC mit einem K-Wert von 65 bis 80, vorzugsweise 70-76 sowie verpastbare Suspensions-PVCs, einschließlich handelsüblicher Mikrosuspensions-PVCs umfassen. Auch Abmischungen der vorgenannten PVC-Typen sind im Rahmen des erfindungsgemäßen Verfahrens einsetzbar.

Nach einem weiteren Vorschlag der Erfindung umfasst die zweite Fraktion eine Dispersion auf Basis von Polyurethan, insbesondere Polyether-, Polyester- oder Polycarbonat-Polyurethan oder Abmischungen derselben.

Alternativ dazu kann die zweite Fraktion auch eine Mischung aus Wasser und einem Emulgator umfassen. Geeignete Emulgatoren im Sinne der Erfindung sind beispielsweise Seifen auf Basis von Polyethylen, Sulfat, Phosphat oder Amin. Es wird weiterhin vorgeschlagen, bezogen auf 100 Gew.-% der ersten Fraktion diese Seifen in einer Menge von 0,2 bis 10 Gew-% mit 2 bis 50 Gew.-% Wasser als zweite Fraktion einzusetzen.

Nach einem weiteren Vorschlag der Erfindung sind die Anteile der ersten und zweiten Fraktion an der pastösen Masse so gewählt, dass unter der Annahme, dass die Summe beider Fraktionen 100 Gew.-% beträgt, die zweite Fraktion 2 bis 60 Gew.-% und entsprechend die erste Fraktion 98 bis 40 Gew.-% der pastösen Masse umfasst. Die darüber hinaus zur pastösen Masse hinzugegebene dritte Fraktion aus Hilfs- und Zusatzstoffen bleibt bei dieser Gewichtanteilsverteilung unberücksichtigt, d.h. sie wird zusätzlich zu den 100 Gew.-% aus erster und zweiter Fraktion der pastösen Masse zugegeben. Die Zugabemengen der im Rahmen der dritten Fraktion verwendeten Hilfs- und Zusatzstoffe kann sich in den von den jeweiligen Herstellern vorgegebenen Mengenbereichen bewegen und obliegt insoweit keinen generellen Beschränkungen.

Die Hilfs- und Zusatzstoffe der dritten Fraktion können beispielsweise Füllstoffe, Weichmacher, Vernetzer, Stabilisatoren, Kicker, Silikone, Flammschutzmittel, Additive und/oder Pigmente umfassen.

Als Füllstoffe kommen nach einem Vorschlag der Erfindung Calciumcarbonat, Cellulose, insbesondere Arbocel-Typen, Calciumsulfat, Bariumsulfat, Siliziumdioxid, wie TS 100, Aluminiumhydroxid, Aluminiumoxid, Zinkoxid und Zinkbromid in Betracht.

Die Auswahl der für die Anwendung im Rahmen des erfindungsgemäßen Verfahrens verwendeten Weichmacher unterliegt ebenso wie die der Füllstoffe keiner generellen Beschränkung. Beispielsweise können als Weichmacher Phtalate, Adipate, Sebacate, Citrate, 1,2-Cyclohexandicarbonsäurediisononylester, nichtaromatische cyclische Esterverbindungen wie DINCH, Dioctylterephthalat (DOTP), Epoxiweichmacher, Oligoglykol- oder Polyethylenglykol-basierte Weichmacher, Rizinusöl-basierte Weichmacher, Polymerweichmacher, Phosphatweichmacher, chlorierte und bromierte Weichmacher, Sulfatweichmacher und ionische Flüssigkeiten vorgesehen werden.

Als Vernetzer kommen im Rahmen der erfindungsgemäß vorgesehenen dritten Fraktion beispielsweise Isocyanate, Aceridine, Carbidiimide, Melamine und Peroxide in Betracht.

Als Stabilisatoren/Kicker kommen im Rahmen des erfindungsgemäßen Verfahrens im Rahmen der dritten Fraktion solche basierend auf Barium, Calcium, Cadmium, Zinn, Blei, Quecksilber, Antimon, Arsen, Thiolen oder Mercaptanen, Phosphiten oder Phosphaten, OBS, Zink, Magnesium und/oder Aluminium in Betracht, ferner sterisch gehinderte und ungehinderte Phenole (z.B. Irganox-Typen), UV-Stabilisatoren, insbesondere HALS, Nano-Titanoxide, β-Diketone, Epoxid-basierte, perchloratbasierte Stabilisatoren und/oder Amin-basierte Stabilisatoren.

Weiterhin kann die dritte Fraktion Flammschutzmittel umfassen, wobei Antimonoxid, Aluminiumoxid, Hydrotalcid, Magnesiumhydroxid, Magnesiumcarbonat, Calciumcarbonat, Zinkborat, verschiedene Phosphate, wie Ammoniumphosphat, Blähgraphite sowie bromierte und chlorierte Weichmacher exemplarisch genannt seien.

Je nach Anwendungsfall können überdies vernetzte, vernetzende und/oder unvernetzende Silikone, wie platinkatalysierte vernetzende Silikone oder kondensationsreaktionsbasierte vernetzende Silikone im Rahmen der dritten Fraktion der pastösen Masse zugegeben werden.

Als Additive können im Rahmen der dritten Fraktion erfindungsgemäß ferner Emulgatoren und Seifen, Entschäumer, rheologische Additive, wie Verdicker und Viskositätserniedriger, Nanoröhren, Quantumdots und dergleichen mehr vorgesehen sein.

Mit dem erfindungsgemäßen Verfahren ist es möglich, einen atmungsaktiven Film mit kompakter, d.h. ungeschäumter Struktur herzustellen, wie es auch möglich ist, einen solchen atmungsaktiven Film mit einer Schaumstruktur herzustellen. Die Schaumstruktur kann einerseits durch Herstellen eines Schlagschaums aus der pastösen Masse vor dessen Aufbringen auf die Unterlage erzeugt werden oder aber der pastösen Masse werden im Rahmen der dritten Fraktion auch Treibmittel, wie Azodicarbonamid, Mikrosphären, Silicagel, Natriumcarbonat, Dinatriumcarbonat, OBSH, Zeolithe und dergleichen mehr hinzugegeben, die beim Trocknen und Ausgelieren die Zellstruktur des Schaumes ausbilden.

Darüber hinaus kann die dritte Fraktion auch Pigmente, beispielsweise organische aber auch anorganische Pigmente, Metallpigmente, Iriodine und dergleichen mehr umfassen.

Nach einem weiteren Vorschlag der Erfindung erfolgt das Trocknen und Ausgelieren der pastösen Masse zu dem porenaufweisenden Film im Rahmen des erfindungsgemäßen Verfahrens unter einer Wärmezufuhr bei Temperaturen zwischen 100°C und 220°C.

Eine hinsichtlich der Produktionseffizienz besonders bevorzugte kontinuierliche Herstellung sieht dabei vor, die pastöse Masse nach dem Aufbringen auf der Unterlage zum Beispiel mittels eines Reverse- bzw. Rollcoaters mittels Rakeln, Sprühen oder Drucken gemeinsam mit der Unterlage durch einen Trockenofen laufen zu lassen, der zur Sicherstellung einer ausreichenden Trocknungsdauer eine Länge von 1 bis 80 m und eine Geschwindigkeit von 2 bis 80 m/min aufweisen sollte.

Im Rahmen des erfindungsgemäßen Verfahrens können atmungsaktive Filme auf Basis von PVC hergestellt werden, die Poren eines mittleren Porendurchmessers im Nanometer- bis Millimeterbereich, beispielsweise von 1 µm bis 1 mm in dem Film aufweisen.

Derartig hergestellte atmungsaktive Filme weisen sodann eine Gasdurchlässigkeit im Bereich von 0,1 bis 200 l dm⁻² min⁻¹, Wasserdampfdurchlässigkeiten im Bereich von 0,1 bis 200 mg cm⁻² h⁻¹ und Wasserundurchlässigkeiten im Bereich von 0,1 bis 60 m² pa⁻¹ w⁻¹ auf.

Im Rahmen des erfindungsgemäßen Verfahrens ist es möglich, atmungsaktive Filme mit Flächengewichten im Bereich von 50 bis 1000 g/m auf einfache Weise herzustellen.

Die Porengröße und die daraus resultierende Atmungsaktivität kann durch Beeinflussung von Rezepturparametern der pastösen Masse, wie Viskosität, Füllstofftyp und
-gehalt, eingesetzte PVC-Type in der ersten Fraktion, Weichmachertyp und - gehalt sowie eingesetzte Polyurethantype und Anteil der zweiten Fraktion in weiten Grenzen eingestellt werden.

Darüber hinaus eignet sich das erfindungsgemäße Verfahren insbesondere zur Herstellung von Kunstledern, die mindestens eine Schicht aus einem solchermaßen hergestellten atmungsaktiven Film aufweisen, beispielsweise eine auf einem textilen Träger aufgebrachte Deckschicht aus einem solchermaßen hergestellten atmungsaktiven Film.

Wie jedoch nachfolgend noch erläutert werden wird, ist es auch möglich, mehrere weitere Schichten eines solchen Kunstleders in der erfindungsgemäßen Weise auszubilden.

Die Herstellung der Kunstlederschichten kann dabei nach den bewährten Verfahren erfolgen, wobei beispielsweise die Aufbringung der pastösen Masse auf einer Unterlage in Betracht kommt, die nach Ausbildung des Films von diesem abgezogen wird, beispielsweise in Form eines ungeprägten oder geprägten Papiers, einer formgebenden Polymer-/Kunststoffform, eines entsprechenden Bandes, Stahlprägeformen oder aber die Unterlage wird von einem Substrat gebildet, welches nach Ausbildung des Films an diesem verbleibt. Beispiele für derartige Substrate sind zum Beispiel textile Träger im Rahmen eines Verbundes zur Herstellung eines Kunstleders, d.h. die im Rahmen des erfindungsgemäßen Verfahrens aufgebrachte pastöse Masse kann z.B. mittels Direktbeschichtung unmittelbar auf den textilen Träger aufgebracht und gemeinsam mit diesem der Wärmezufuhr unterworfen werden, woraufhin die pastöse Masse auf dem textilen Träger oder einem anderen geeigneten Substrat trocknet und ausgeliert, die Schicht des atmungsaktiven Films ausbildet und mit der Unterlage in Form des Substrates unter Ausbildung eines Mehrschichtverbundes verbunden bleibt.

Es ist somit offensichtlich, dass das erfindungsgemäße Verfahren eine besonders rationelle Herstellungsweise ermöglicht.

Die Erfindung wird nachfolgend anhand von Ausführungsbeispielen in der Zeichnung näher erläutert. Es zeigen:
- Fig. 1: einen stark vergrößerten Schnitt durch ein Kunstleder, hergestellt unter Anwendung des erfindungsgemäßen Verfahrens;
- Fig. 2: einen Schnitt durch eine zweite Ausführungsform eines Kunstleders, hergestellt unter Anwendung des erfindungsgemäßen Verfahrens.

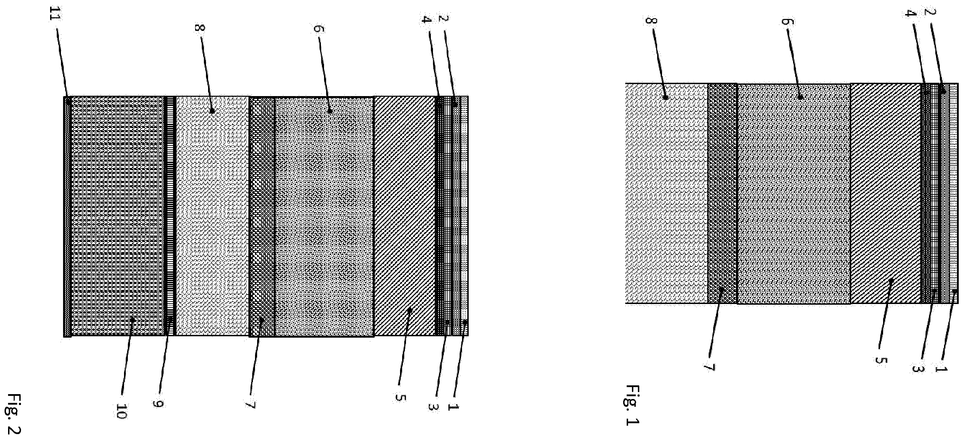

Aus der Fig. 1 ist ein Aufbau eines als Kunstleder dienenden Mehrschichtverbundes ersichtlich, wie er beispielsweise als Bezugsmaterial für Sitze zum Beispiel in Automobilinnenräumen Verwendung finden kann.

Die einzelnen Schichten sind aufeinanderfolgend ausgehend von einer die Sichtseite bildenden Oberseite mit Bezugszeichen 1 bis 8 gekennzeichnet.

Die oberste Schicht 1 wird von einer die Haptik und den Glanz bestimmenden Lackschicht zum Beispiel auf Basis von Polyurethan oder Acrylat oder auch auf Basis von PVC oder PVDF, auf Anilin-, Epoxy- oder Polyamid-Polyesterbasis gebildet, während die darunter liegende Schicht 2 ebenfalls von einer Lackschicht zum Beispiel auf Acrylatbasis oder einer der vorgenannten Alternativen gebildet wird, die dem Verbund Abriebfestigkeit verleiht.

Die darunter liegende Schicht 3 ist wiederum eine Lackschicht, die dem Verbund die gewünschte Farbgebung verleiht und ist daher üblicherweise als Druckschicht unter Einsatz von geeigneten Pigmenten ausgebildet.

Die folgende Schicht 4 stellt eine Adhäsionsschicht dar, die beispielsweise auf Basis einer Lackschicht enthaltend Polyurethan oder Acrylat aufgebaut werden kann. Diese stellt die Haftung der darüber liegenden Lackschichten 1 bis 3 mit der darunter liegenden Schicht 5 her.

Die Schicht 5 ist aus einem atmungsaktiven Film auf Basis von PVC und einem Fremdstoff, etwa einem Fremdpolymer auf Basis eines Polyurethan nach dem vorangehend erläuterten Verfahren hergestellt und kann beispielsweise ein Flächengewicht von 10 bis 1000 g/m², vorzugsweise 120 bis 500 g/m² aufweisen.

Darunter liegend ist eine Zwischenschicht 6 ebenfalls auf Basis eines atmungsaktiven Films vorgesehen, der nach dem erfindungsgemäßen Verfahren herstellt worden ist, wobei diese Zwischenschicht in Form eines Schlagschaumes, expandierenden Polymerkugeln, wie Expancell oder durch Zusatz von Treibmitteln geschäumt ausgebildet werden kann, während die darüber befindliche Schicht 5 und auch die nachfolgend noch erläuterte darunter liegende Adhäsionschicht 7 kompakt ausgebildet sind. Das Flächengewicht der geschäumten Zwischenschicht 6 beträgt etwa 10 bis 1000 g/m².

Unterhalb der geschäumten Zwischenschicht 6 befindet sich eine Adhäsionsschicht 7, die mit einem Flächengewicht von 50 bis 250 g/m² ebenfalls aus einem atmungsaktiven Film, hergestellt nach dem erfindungsgemäßen Verfahren gebildet sein kann. Diese Schicht 7 stellt die Haftung zu der mit Bezugszeichen 8 gekennzeichneten untersten Trägerschicht dar, die in an sich bekannter Weise von einem textilen, polymeren oder geschäumten Trägermaterial gebildet wird. Hierbei kann es sich um ein gewebtes Trägermaterial, ein Vlies, Gitter auf organischer oder anorganischer Basis, wie Steinwolle, Gals- und Carbonfasern und dergleichen mehr handeln, gegebenenfalls auch unter Zugabe von elektrisch leitfähigen Fasern, um einer elektrostatischen Aufladung entgegenzuwirken.

Das Kunstleder gemäß Fig. 1 wird beispielsweise im so genannten Umkehrverfahren hergestellt, indem zunächst die Zwischenschicht 5 auf ein Substrat, z.B. eine geprägte oder nicht geprägte Papierbahn, Kunststoffbahn oder Metallbahn aufgetragen, ausgeheizt und gefolgt von Zwischenschicht 6, und 7 sowie des Trägermaterials 8 beschichtet sowie ausgeheizt wird, dann von dem Substrat abgezogen und anschließend mit den Schichten 1-4 durch beispielsweise Rastern, Rakeln oder Sprühen beschichtet wird.

Durch Anwendung geeigneter Verfahren, wie Stahlprägen, Vakuumprägen, Silikon-Tuch-Walzenprägen und dergleichen kann das Kunstleder überdies im Bereich seiner Sichtseite, etwa im Bereich der oberen atmungsaktive Schicht 5 sowie den darüber liegenden Lackschichten 1 bis 4 eine eingebrachte Oberflächenprägung in Form einer Ledernarbstruktur aufweisen.

In der Fig. 2 ist ein auf dem Ausführungsbeispiel der Fig. 1 aufbauendes Ausführungsbeispiel dargestellt, bei dem der Schichtenaufbau von der Ober- bzw. Sichtseite her bis zur Schicht 8 dem Aufbau der Fig. 1 entspricht und zur Vermeidung von Wiederholungen hier nicht nochmals gesondert erläutert wird.

Das Ausführungsbeispiel der Fig. 2 ist demgemäß unterhalb des textilen Trägers 8 über eine atmungsaktive Adhäsionsschicht 9, die beispielsweise gedruckt sein kann und einen geeigneten Haftkleber enthaltend Polyurethan, Acrylat, PVC oder PVDF oder einen Haftkleber auf Anilin-, Epoxy- oder Polyester-Polyamidbasis umfasst, mit einer nachträglich laminierten Polsterschicht 10 verbunden, die beispielsweise von einem Polyurethanschaum, einem Polyolefinschaum oder dergleichen mehr gebildet sein kann und wahlweise auch nach dem erfindungsgemäßen Verfahren hergestellt werden kann. Eine solche zusätzliche nachträglich auflaminierte Polsterschicht 10 verleiht einem solchen Kunstleder eine besondere elastische Nachgiebigkeit, wie sie beispielsweise bei Anwendungen für Sonnenblenden, Armlehnen und dergleichen wünschenswert ist.

Unterhalb der Polsterschicht 10 befindet sich noch eine textile Rückseitenschicht 11, die zum Beispiel aus einem Gewebe oder Vlies aufgebaut sein kann.

Diese unter Anwendung von bis zu 11 Schichten aus nach dem erfindungsgemäßen Verfahren hergestellten Filmen hergestellte Kunstleder weisen hervorragende Atmungsaktivität mit Gasdurchlässigkeiten im Bereich von 1 bis 200 dm⁻² min⁻¹, Wasserdampfdurchlässigkeiten zwischen 0,1 bis 200 mg cm⁻² h⁻¹, Wasserundurchlässigkeiten im zwischen 2 bis 60 m² pa⁻¹ w⁻¹ bei hoher Wärme- und Lichtbeständigkeit sowie Abriebfestigkeit auf und eignen sich insbesondere für die Herstellung von Kunstledern für Automobilinnenraumanwendungen, bei denen die Atmungsaktivität als sehr angenehm empfunden wird.

Die Atmungsaktivität eröffnet darüber hinaus auch die Möglichkeit, Wand- und Deckenbespannungen aus nach dem erfindungsgemäßen Verfahren hergestellten atmungsaktiven Filmen herzustellen, die äußerst widerstandsfähig sind, jedoch etwaig hinter der Wand oder Deckenbespannung befindliche Bauwerksfeuchte problemlos durch die Bespannung hindurch diffundieren lassen, so dass Bauschäden durch Schimmelbildung und dergleichen effektiv vorgebeugt wird.

## Patentansprüche

1. Verfahren zur Herstellung eines atmungsaktiven Films auf Basis von Polyvinylchlorid (PVC), umfassend die Schritte:
- Bereitstellen einer pastösen Masse, umfassend eine erste Fraktion aus PVC und eine zweite Fraktion aus einer Dispersion auf Basis von Polyether-, Polyester- oder Polycarbonat-Polyurethanen oder Abmischungen derselben und Wasser und eine dritte Fraktion aus Hilfs- und Zusatzstoffen, die miteinander zu der pastösen Masse vermischt werden, wobei die pastöse Masse ohne Zugabe eines organischen Lösungsmittels, ausgenommen Wasser aus den Fraktionen gebildet wird,
- Aufbringen der pastösen Masse auf eine Unterlage
- Trocknen und Ausgelieren der auf die Unterlage aufgebrachten pastösen Masse unter Wärmezufuhr zu einem kompakten Film mit ungeschäumter Struktur, wobei von der einen zur anderen Oberfläche des Filmes verlaufende Poren eines mittleren Porendurchmessers von 1 µm bis 1 mm in dem Film ausgebildet werden, die dem Film Atmungsaktivität mit einer Gasdurchlässigkeit von 0,1 bis 200 l dm⁻² min⁻¹ und einer Wasserdampfdurchlässigkeit von 0,1 bis 200 mg cm⁻² h⁻¹ verleihen.

2. Verfahren nach Anspruch 1, **dadurch gekennzeichnet, dass** die erste Fraktion Emulsions-PVC mit einem K-Wert von 65 bis 80 oder Suspensions-PVC oder Abmischungen derselben umfasst.

3. Verfahren nach einem der Ansprüche 1 oder 2, **dadurch gekennzeichnet, dass** die zweite Fraktion eine Mischung aus Wasser und einem Emulgator umfasst.

4. Verfahren nach Anspruch 3, **dadurch gekennzeichnet, dass** der Emulgator von einer Polyethylen-, Sulfat-, Phosphat- oder Amin-basierten Seife gebildet ist.

5. Verfahren nach Anspruch 3 oder 4, **dadurch gekennzeichnet, dass** die zweite Fraktion bezogen auf 100 Gew.-% der ersten Fraktion 2 bis 50 Gew.-% Wasser und 0,2 bis 10 Gew.-% des Emulgators enthält.

6. Verfahren nach einem der Ansprüche 1 bis 5, **dadurch gekennzeichnet, dass** die pastöse Masse 2 bis 60 Gew.-% der zweiten Fraktion und 98 bis 40 Gew. % der ersten Fraktion umfasst, wobei die Summe der ersten und zweiten Fraktion 100 Gew.-% beträgt.

7. Verfahren nach einem der Ansprüche 1 bis 6, **dadurch gekennzeichnet, dass** die Hilfs- und Zusatzstoffe Füllstoffe, Weichmacher, Vernetzer, Stabilisatoren, Kicker, Silikone, Flammschutzmittel, Additive und/oder Pigmente umfassen.

8. Verfahren nach Anspruch 7, **dadurch gekennzeichnet, dass** als Füllstoffe Calciumcarbonat, Cellulose, Calciumsulfat, Bariumsulfat, Siliziumdioxid, Aluminiumdioxid, Zinkoxid und/oder Zinkbromid vorgesehen sind.

9. Verfahren nach Anspruch 7 oder 8, **dadurch gekennzeichnet, dass** als Weichmacher Phtalate, Adipate, Sebacate, Citrate, 1,2-Cyclohexandicarbonsäurediiso-nonylester, Dioctylterephthalat, Epoxidweichmacher, Glykol-, Oligoglykol- oder Polyethylenglykol-basierte Weichmacher, Rizinusöl-basierte Weichmacher, Polymerweichmacher, Phosphatweichmacher, cyclische nichtaromatische Weichmacher (DINCH), chlorierte und bromierte Weichmacher, Sulfatweichmacher und/oder ionische Flüssigkeiten vorgesehen sind.

10. Verfahren nach einem der Ansprüche 7 bis 9, **dadurch gekennzeichnet, dass** als Vernetzer Isocyanate, Aceridine, Carbidiimide, Melamine und/oder Peroxide vorgesehen sind.

11. Verfahren nach einem der Ansprüche 7 bis 10,**dadurch gekennzeichnet, dass** als Stabilisatoren und/oder Kicker solche basierend auf Barium, Calcium, Cadmium, Zinn, Blei, Quecksilber, Antimon, Arsen, Thiolen oder Mercaptanen, Phosphiten oder Phosphaten, OBS, Zink, Magnesium und/oder Aluminium, Phenole, HALS, Nano-Titanoxide, β-Diketone, Epoxid-basierte Stabilisatoren, Perchlorat-basierte Stabilisatoren und/oder Amin-basierte Stabilisatoren vorgesehen sind.

12. Verfahren nach einem der Ansprüche 7 bis 11, **dadurch gekennzeichnet, dass** als Flammschutzmittel Antimonoxid, Aluminiumoxid, Hydrotalcid, Magnesiumhydroxid, Magnesiumcarbonat, Calciumcarbonat, Zinkborat und/oder Phosphate, Blähgraphite sowie bromierte oder chlorierte Weichmacher vorgesehen sind.

13. Verfahren nach einem der Ansprüche 7 bis 12, **dadurch gekennzeichnet, dass** als Additive Emulgatoren, Seifen, Entschäumer, rheologische Additive, Nanoröhren und/oder Quantumdots vorgesehen sind.

14. Verfahren nach einem der Ansprüche 1 bis 13, **dadurch gekennzeichnet, dass** das Trocknen und Ausgelieren der pastösen Masse zu dem Poren aufweisenden Film unter Wärmezufuhr bei Temperaturen zwischen 100 °C und 220 °C erfolgt.

15. Verfahren nach einem der Ansprüche 1 bis 14, **dadurch gekennzeichnet, dass** die auf der Unterlage aufgebrachte pastöse Masse einen Trockenofen einer Länge von 1 bis 80 m mit einer Geschwindigkeit von 2 bis 80 m/min durchläuft, wobei das Trocknen und Ausgelieren der pastösen Masse zu dem Poren aufweisenden Film bewirkt wird.

16. Verfahren nach einem der Ansprüche 1 bis 15, **dadurch gekennzeichnet, dass** der atmungsaktive Film mit einer Wasserundurchlässigkeit von 0,1 bis 60 m² pa⁻¹ w⁻¹ erhalten wird.

17. Verfahren nach einem der Ansprüche 1 bis 16, **dadurch gekennzeichnet, dass** der atmungsaktive Film mit einem Flächengewicht von 50 bis 2000g/m² erhalten wird.

18. Verfahren nach einem der Ansprüche 1 bis 17, **dadurch gekennzeichnet, dass** die pastöse Masse mittels eines Reverse- oder Rollcoaters, mittels Rakeln, Sprühen oder Drucken auf die Unterlage aufgebracht wird.

19. Verfahren nach einem der Ansprüche 1 bis 18, **dadurch gekennzeichnet, dass** die Unterlage nach der Ausbildung des Films von diesem abgezogen wird oder von einem Substrat gebildet wird, welches nach Ausbildung des Films an diesem verbleibt.

20. Kunstleder, umfassend mindestens eine Schicht aus einem atmungsaktiven Film, hergestellt nach dem Verfahren gemäß einem der vorangehenden Ansprüche.

## Claims

1. Method for producing a breathable film based on polyvinyl chloride (PVC), comprising the steps of:
- providing a pasty composition comprising a first fraction of PVC and a second fraction of a dispersion based on polyether-, polyester- or polycarbonate-polyurethanes or blends thereof and water, and a third fraction of auxiliaries and adjuvants, which are mixed with one another to form the pasty composition, the pasty composition being formed from the fractions without addition of an organic solvent, except for water,
- applying the pasty composition to a support,
- drying and gelling the pasty composition applied to the support, with supply of heat, to give a compact film of unfoamed structure, with pores running from one surface of the film to the other and having an average pore diameter of 1 *µ*m to 1 mm being formed in the film and endowing the film with breathability, with a gas permeability of 0.1 to 200 1 dm⁻² min⁻¹ and water vapour permeability of 0.1 to 200 mg cm⁻² h⁻¹.

2. Method according to Claim 1, **characterized in that** the first fraction comprises emulsion-PVC having a K value of 65 to 80 or suspension-PVC or blends thereof.

3. Method according to either of Claims 1 and 2, **characterized in that** the second fraction comprises a mixture of water and an emulsifier.

4. Method according to Claim 3, **characterized in that** the emulsifier is formed from a polyethylene-, sulfate-, phosphate- or amine-based soap.

5. Method according to Claim 3 or 4, **characterized in that** the second fraction, based on 100 wt% of the first fraction, comprises 2 to 50 wt% of water and 0.2 to 10 wt% of the emulsifier.

6. Method according to any of Claims 1 to 5, **characterized in that** the pasty composition comprises 2 to 60 wt% of the second fraction and 98 to 40 wt% of the first fraction, the sum of the first and second fractions being 100 wt%.

7. Method according to any of Claims 1 to 6, **characterized in that** the auxiliaries and adjuvants comprise fillers, plasticizers, crosslinkers, stabilizers, kickers, silicones, flame retardants, additives and/or pigments.

8. Method according to Claim 7, **characterized in that** said fillers comprise calcium carbonate, cellulose, calcium sulfate, barium sulfate, silicon dioxide, aluminium dioxide, zinc oxide and/or zinc bromide.

9. Method according to Claim 7 or 8, **characterized in that** said plasticizers comprise phthalates, adipates, sebacates, citrates, diisononyl 1,2-cyclohexanedicarboxylate, dioctyl terephthalate, epoxide plasticizers, glycol-, oligoglycol- or polyethylene glycol-based plasticizers, castor oilbased plasticizers, polymer plasticizers, phosphate plasticizers, cyclic non-aromatic plasticizers (DINCH), chlorinated and brominated plasticizers, sulfate plasticizers and/or ionic liquids.

10. Method according to any of Claims 7 to 9, **characterized in that** said crosslinkers comprise isocyanates, acridines, carbodiimides, melamines and/or peroxides.

11. Method according to any of Claims 7 to 10, **characterized in that** said stabilizers and/or kickers comprise those based on barium, calcium, cadmium, tin, lead, mercury, antimony, arsenic, thiols or mercaptans, phosphites or phosphates, OBS, zinc, magnesium and/or aluminium, phenols, HALS, nano-titanium oxides, β-diketones, epoxide-based stabilizers, perchlorate-based stabilizers and/or amine-based stabilizers.

12. Method according to any of Claims 7 to 11, **characterized in that** said flame retardants comprise antimony oxide, aluminium oxide, hydrotalcite, magnesium hydroxide, magnesium carbonate, calcium carbonate, zinc borate and/or phosphates, expandable graphites and also brominated or chlorinated plasticizers.

13. Method according to any of Claims 7 to 12, **characterized in that** said additives comprise emulsifiers, soaps, defoamers, rheological additives, nanotubes and/or quantum dots.

14. Method according to any of Claims 1 to 13, **characterized in that** the drying and gelling of the pasty composition to give the pore-comprising film takes place with supply of heat at temperatures between 100°C and 220°C.

15. Method according to any of Claims 1 to 14, **characterized in that** the pasty composition applied to the support passes through a drying oven with a length of 1 to 80 m at a speed of 2 to 80 m/min, where the drying and gelling of the pasty composition to give the pore-comprising film is brought about.

16. Method according to any of Claims 1 to 15, **characterized in that** the breathable film is obtained with a water impermeability of 0.1 to 60 m² pa⁻¹ w⁻¹.

17. Method according to any of Claims 1 to 16, **characterized in that** the breathable film is obtained with a basis weight of 50 to 2000 g/m².

18. Method according to any of Claims 1 to 17, **characterized in that** the pasty composition is applied to the support by means of a reverse coater or roll coater, by means of knife-coating, spraying or printing.

19. Method according to any of Claims 1 to 18, **characterized in that** the support, after the formation of the film, is removed from the film or is formed by a substrate which remains on the film after the film has been formed.

20. Artificial leather comprising at least one layer of a breathable film produced by the method according to any of the preceding claims.

## Revendications

1. Procédé de fabrication d'un film respirable à base de polychlorure de vinyle (PVC), comprenant les étapes suivantes :
- la préparation d'une masse pâteuse, comprenant une première fraction constituée par du PVC et une deuxième fraction constituée par une dispersion à base de polyéther-, polyester- ou polycarbonate-polyuréthanes ou des mélanges de ceux-ci et d'eau, et une troisième fraction constituée par des adjuvants et des additifs, qui sont mélangées les unes avec les autres pour former la masse pâteuse, la masse pâteuse étant formée à partir des fractions sans ajout d'un solvant organique, à l'exception de l'eau,
- l'application de la masse pâteuse sur un support,
- le séchage et la gélification de la masse pâteuse appliquée sur le support avec apport de chaleur pour former un film compact de structure non expansée, des pores allant de l'une jusqu'à l'autre surface du film, d'un diamètre de pore moyen de 1 *µ*m à 1 mm, étant formés dans le film, et conférant au film une respirabilité avec une perméabilité aux gaz de 0,1 à 200 1 dm⁻² min⁻¹ et une perméabilité à la vapeur d'eau de 0,1 à 200 mg cm⁻² h⁻¹.

2. Procédé selon la revendication 1, **caractérisé en ce que** la première fraction comprend un PVC en émulsion ayant une valeur K de 65 à 80 ou un PVC en suspension ou des mélanges de ceux-ci.

3. Procédé selon l'une quelconque des revendications 1 ou 2, **caractérisé en ce que** la deuxième fraction comprend un mélange d'eau et d'un émulsifiant.

4. Procédé selon la revendication 3, **caractérisé en ce que** l'émulsifiant est formé par un savon à base de polyéthylène, de sulfate, de phosphate ou d'aminé.

5. Procédé selon la revendication 3 ou 4, **caractérisé en ce que** la deuxième fraction contient 2 à 50 % en poids d'eau et 0,2 à 10 % en poids de l'émulsifiant, par rapport à 100 % en poids de la première fraction.

6. Procédé selon l'une quelconque des revendications 1 à 5, **caractérisé en ce que** la masse pâteuse comprend 2 à 60 % en poids de la deuxième fraction et 98 à 40 % en poids de la première fraction, la somme de la première et de la deuxième fraction étant de 100 % en poids.

7. Procédé selon l'une quelconque des revendications 1 à 6, **caractérisé en ce que** les adjuvants et les additifs comprennent des charges, des plastifiants, des agents de réticulation, des stabilisateurs, des activateurs, des silicones, des agents ignifuges, des additifs et/ou des pigments.

8. Procédé selon la revendication 7, **caractérisé en ce que** du carbonate de calcium, de la cellulose, du sulfate de calcium, du sulfate de baryum, du dioxyde de silicium, du dioxyde d'aluminium, de l'oxyde de zinc et/ou du bromure de zinc sont prévus en tant que charges.

9. Procédé selon la revendication 7 ou 8, **caractérisé en ce que** des phtalates, des adipates, des sébacates, des citrates, de l'ester diisononylique de l'acide 1,2-cyclohexanedicarboxylique, du dioctyltéréphtalate, des plastifiants époxydes, des plastifiants à base de glycol, d'oligoglycol ou de polyéthylène glycol, des plastifiants à base d'huile de ricin, des plastifiants polymères, des plastifiants phosphates, des plastifiants cycliques non aromatiques (DINCH), des plastifiants chlorés et bromés, des plastifiants sulfates et/ou des liquides ioniques sont prévus en tant que plastifiants.

10. Procédé selon l'une quelconque des revendications 7 à 9, **caractérisé en ce que** des isocyanates, des acridines, des carbodiimides, des mélamines et/ou des peroxydes sont prévus en tant qu'agents de réticulation.

11. Procédé selon l'une quelconque des revendications 7 à 10, **caractérisé en ce que** des stabilisateurs et/ou activateurs à base de baryum, de calcium, de cadmium, d'étain, de plomb, de mercure, d'antimoine, d'arsenic, de thiols ou de mercaptans, de phosphites ou de phosphates, d'OBS, de zinc, de magnésium et/ou d'aluminium, de phénols, d'HALS, de nano-oxydes de titane, de β-dicétones, des stabilisateurs à base d'époxyde, des stabilisateurs à base de perchlorate et/ou des stabilisateurs à base d'aminé sont prévus en tant que stabilisateurs et/ou activateurs.

12. Procédé selon l'une quelconque des revendications 7 à 11, **caractérisé en ce que** de l'oxyde d'antimoine, de l'oxyde d'aluminium, de l'hydrotalcite, de l'hydroxyde de magnésium, du carbonate de magnésium, du carbonate de calcium, du borate de zinc et/ou des phosphates, des graphites expansés, ainsi que des plastifiants bromés ou chlorés sont prévus en tant qu'agents ignifuges.

13. Procédé selon l'une quelconque des revendications 7 à 12, **caractérisé en ce que** des émulsifiants, des savons, des antimousses, des additifs rhéologiques, des nanotubes et/ou des points quantiques sont prévus en tant qu'additifs.

14. Procédé selon l'une quelconque des revendications 1 à 13, **caractérisé en ce que** le séchage et la gélification de la masse pâteuse pour former le film comprenant des pores ont lieu avec apport de chaleur à des températures comprises entre 100 °C et 220 °C.

15. Procédé selon l'une quelconque des revendications 1 à 14, **caractérisé en ce que** la masse pâteuse appliquée sur le support traverse un four de séchage d'une longueur de 1 à 80 m à une vitesse de 2 à 80 m/min, le séchage et la gélification de la masse pâteuse pour former le film comprenant des pores étant obtenus.

16. Procédé selon l'une quelconque des revendications 1 à 15, **caractérisé en ce que** le film respirable est obtenu avec une imperméabilité à l'eau de 0,1 à 60 m² pa⁻¹ w⁻¹.

17. Procédé selon l'une quelconque des revendications 1 à 16, **caractérisé en ce que** le film respirable est obtenu avec un poids superficiel de 50 à 2 000 g/m².

18. Procédé selon l'une quelconque des revendications 1 à 17, **caractérisé en ce que** la masse pâteuse est appliquée au moyen d'une coucheuse inverse ou à rouleau, par raclage, pulvérisation ou impression sur le support.

19. Procédé selon l'une quelconque des revendications 1 à 18, **caractérisé en ce que** le support est retiré du film après la formation de celui-ci, ou est formé par un substrat qui reste sur le film après la formation de celui-ci.

20. Cuir artificiel, comprenant au moins une couche en un film respirable, fabriquée par le procédé selon l'une quelconque des revendications précédentes.
